Europäisches Patentamt

(19) European Patent Office

Office européen des brevets

(11) Publication number : **0 260 233 B1**

(12) **EUROPEAN PATENT SPECIFICATION**

(45) Date of publication of patent specification :
06.03.91 Bulletin 91/10

(51) Int. Cl.⁵ : **B23K 35/00, C21D 9/04, E01B 7/12**

(21) Application number : 87830321.3

(22) Date of filing : 07.09.87

(54) **A process to connect austenitic manganese steel frogs of point to carbon or low-alloy steel rails.**

(30) Priority : 10.09.86 IT 4843686

(43) Date of publication of application :
16.03.88 Bulletin 88/11

(45) Publication of the grant of the patent :
06.03.91 Bulletin 91/10

(84) Designated Contracting States :
AT BE CH DE ES FR GB GR LI LU NL SE

(56) References cited :
EP-A- 0 070 774
FR-A- 1 528 479
FR-A- 1 538 838
FR-A- 2 346 495
FR-A- 2 471 831
GB-A- 2 002 668

(73) Proprietor : BREDA FUCINE MERIDIONALI
S.p.A.
Via Tommaso Columbo, 7
I-70100 Bari (IT)

(72) Inventor : Bartoli, Mauro BREDA FUCINE
MERIDIONALI S.p.A.
Via Tommaso Columbo, 7
I-70100 Bari (IT)
Inventor : Di Gioia, Michele BREDA FUCINE
MERIDIONALI S.p.A.
Via Tommaso Columbo, 7
I-70100 Bari (IT)

(74) Representative : Taliercio, Antonio et al
ING. BARZANO' & ZANARDO ROMA S.p.A. Via
Piemonte, 26
I-00187 Roma (IT)

## Description

The present invention relates to a process for connecting austenitic manganese steel frogs of points to carbon or low-alloy steel rails, and more particularly it relates to a process in which the interposition of an intermediate connecting member is provided between points and rail, the characteristics of said member being such as to allow the same to be first welded to the rail and then, next, to the frog itself with no problems stemming from the two different types of welding.

It is well known that austenitic manganese steel has the property of becoming work-hardened as a result of repeated dynamic stresses, so as to reach at the surfaces undergoing such stresses hardness values even higher than 500 BHN, according to the amounts of carbon present, while keeping inside the typical toughness of the austenitic structure.

Owing to the properties mentioned above, manganese steel is largely employed in the field of articles which have to resist wear caused by dynamic stresses, and, more particularly, in the field of construction of frogs of points, said frogs being obtained as melts of such steel type in the solution heat-treated state.

According to such technology, the solution heat-treatment is a necessary step as such steel type gives rise to carbide precipitation at the grain boundaries and/or in the acicular form inside the same, with the consequent formation of very brittle structures, if said steel is kept for some time at temperatures between 300°C and 800°C.

That is the main reason why austenitic steel is not employed for uses at temperatures higher than 260°C, and also welding operations performed with conventional procedures on such material are rather dangerous if all suitable precautions allowing the material to be "coldwelded" are not taken.

In view of the considerations above, a widely employed procedure at the present time provides the connection of manganese melt frogs to the rail by employing bolted fish-plates, but such procedure gives rise inevitably to a loss of continuity at the frog-rail interface, with consequent hammer blows during the passage of trains, especially in the case of high speed railways and when points are mounted on prestressed reinforced concrete sleepers. Such hammer blows are the cause originating impulsive fatigue breaking of frog shanks as well as notable wear both on the rolling plane of the railway and on wheels and, finally, such hammer blows disturb the running comfort.

Remarkable difficulties are met with in performing the welding of the frog direct to the rail also employing relatively modern procedures such as for instance the flash butt welding, so that such techniques cannot be realized.

Indeed, while the rail is made up of hardenable steel so that it needs a slow cooling from the welding temperature in order to avoid the formation of brittle structures, manganese steel which the frog is made up of would become brittle as a result of such slow cooling action.

Consequently, an industrially invaluable procedure for connecting the frog to the rail with no loss of mechanical continuity must necessarily provide the interposition of an intermediate member made up of a material which is compatible both with the need for a slow cooling of the rail after welding, and with the need for a fast cooling of the frog.

Various solutions proposed in some preceding Patent applications are known at the present time to solve the problem mentioned above.

Such solutions show differences both as regards the procedure for connecting the intermediate member to the frog and to the rail, and as regards the sizes and the structure of the intermediate member itself, and they even suggest in some cases (European Patent application 0070774 Creusot Loire) the modification of the fundamental chemical composition of the manganese frog.

The problem of the connection between the intermediate member and the frog, on one side, and between the intermediate member and the rail, on the other side, has been also tackled in the Italian Paten No. 1 098 168 (corresponding to the G.B. patent 2,002,668) in the name of VOEST ALPINE, in which the proposal is made of shortening the length of the intermediate member to values lower than 25 mm in order to avoid the deformation of the same, but such values do not allow the independence between the welding operations to be preserved at the optimal extent, so that the quick cooling of the frogintermediate member weld by water cannot be carried out.

The technology suggested in said Patent application indeed provides first the welding between the intermediate member and the rail, and then the welding between the frog and the intermediate member, so that the possibility is excluded of carrying out a solution heat-treatment after welding of the frog-intermediate member weld, as the latter, being already connected to the rail, would cause hardening of said rail if subjected to such solution heat-treatment, with the consequent formation in the rail material of brittle structures.

One of the main difficulties which are to be overcome in order to avoid the drawbacks of the technologies mentioned above lies in the choice of the intermediate member both as regards the chemical composition, and consequently the physico-chemical properties, and as regards the sizes of the same.

The main property of the intermediate member, obviously in addition to the property of being able to resist the two welding heat-cycles, must be that of becoming work-hardened when in use or even before installation by means of suitable treatments such as for instance peening, pressing, shot-peening, rolling or explosive compression, so that hardness values are obtained which are intermediate between the hardness of the frog and that of the rail, and the intermediate member represents a member of gradual transition between the two materials.

The second essential characteristic which is asked of the intermediate member is that of being of such a length as to prevent the two welds from affecting each other.

Such problems have been tackled and solved in the Italian Patent No.1 169 367 in the name of BREDA FUCINE MERIDIONALI, wherein the adoption of an intermediate member is suggested having the following composition "A" :

| C | 0.4 | – | 0.6 % |
|----|-----|---|-------|
| Mn | 12 | – | 15 % |
| Mo | 1.5 | – | 2.5 % |
| Ni | 3 | – | 15 % |

the balance being Fe and impurities normally present in steel ; or the following composition "B" :

| C | 0.2 % | | max |
|----|-----|---|-------|
| Mn | 3.5 | – | 6.5 % |
| Si | 2 % | | max |
| Cr | 22 | – | 30 % |
| Ni | 9 | – | 25 % |

and the balance Fe and impurities normally present in steel ; and a length of 100-200 mm.

The intermediate member according to the proposal of the Patent application of the BREDA FUCINE MERIDIONALI stands the two different heat cycles of welding and shows a remarkable capability to become work-hardened though it does not reaches the levels of austenitic manganese steel.

More particularly, subjecting the intermediate members obtained with the two compositions mentioned above to a work-hardening process through explosive action, hardness values of about 320 BHN are obtained after three blows on members made up of material of the composition "A", and hardness values of about 265 BHN are obtained after three blows on members made up of material having the composition "B", whereas the hardness values obtained after a similar treatment performed on austenitic manganese steel are of about 390 BHN. The starting values of hardness was of about 215 BHN for composition "A" and for austenitic manganese steel, and of about 190 BHN for composition "B".

The particular values of sizes and shape chosen for the intermediate member are also optimal : indeed, as the intermediate member is of cross-section close to that of the frog point, on one side, and to that of the rail, on the other side, any possible increase in stresses due to sudden changes in shape are practically non-existent, such increases in stresses being much feared in the case of fatigue loads like those occurring when a train is passing. The length chosen, which is between 100 and 200 mm, warrants in practice the absolute absence of any reciprocal thermal influence between the two weld joints.

Moreover, in the Patent application of the BREDA FUCINE MERIDIONALI mentioned above a process is suggested for the realization of the frog-intermediate member-rail assembly which substantially provides first the connection frog-intermediate member, and next the connection between said intermediate member and the rail.

Now, it has been found, and it is suggested according to the present invention, that, employing an intermediate member between frog and rail having the characteristic features disclosed and claimed in the Italian Patent No. 1 169 367, a process can be carried out to obtain a frog-intermediate member-rail assembly that, obviating the drawbacks mentioned above of the preceding technologies, gives for some applications better results with respect to the preceding procedure proposed by the Applicant itself.

Accordingly, it is a specific object of the present invention to realize a process for connecting austenitic manganese steel frogs of points to carbon or low-alloy steel rails, said process comprising the followings steps :

a) realizing an intermediate member having the composition "A" :

| C | 0.4 | – | 0.6 % |
|---|---|---|---|
| Mn | 12 | – | 15 % |
| Mo | 1.5 | – | 2.5 % |
| Ni | 3 | – | 15 % |

the balance being Fe and impurities normally present in steel ; or having the composition "B" :

| C | 0.2 % | max |
|---|---|---|
| Mn | 3.5 – 6.5 % | |
| Si | 2 % | max |
| Cr | 22 – 30 % | |
| Ni | 9 – 25 % | |

the balance being Fe and impurities normally present in steel ; said member being also of cross section close to that of the frog point, on one side, and of the rail, on the other side ; said intermediate member having in addition a length between 100 and 200 mm ;

b) welding, by means of a procedure without employing weld material, the intermediate member to the carbon or low-alloy steel rail ;

c) cooling the weld under controlled conditions ;

d) performing a stress-relieving heat treatment in a furnace of the assembly made up of the intermediate member and the rail ;

e) welding, by means of a procedure without employing weld material, the anti-wear austenitic manganese steel frog to said intermediate member ;

f) cooling the weld rapidly with water, such weld being that obtained in step e).

According to a preferred embodiment of the present invention, the intermediate member is subjected, before installing the same, to a work-hardening operation through peening, pressing, shot-peening, rolling or explosive compression.

Such operation is carried out adopting the same procedures normally employed for work-hardening manganese steel of frogs.

Preferably, welding according to steps b) and e) is performed by the flash butt welding technique.

It is clearly evident that the process carried out according to the present invention, with respect to processes which provide welding of the intermediate member first to the frog and next to the rail, though does not allow the solution heat-treatment of the frog with the four stems welded before welding to the rails, contemplates a repeated local solution heat-treatment or anyway a treatment that inhibits the formation of manganese carbides brittle structures, owing to the rapid cooling by water carried out after welding performed by the flash butt welding technique or by any other similar process comprising a localized heating up to the carbides solution temperature.

Moreover, according to laboratory tests carried out at the BREDA FUCINE MERIDIONALI works of Bari, it was shown that the repetition of the solution heat-treatment on welded joints between manganese steel and steel of the type mentioned above having the composition "B" previously reported (i.e., low-carbon steel) gives rise to extremely brittle structures at points corresponding to the connection lines.

On the contrary, with respect to the procedure suggested by the VOEST ALPINE in the Italian Patent No. 1 098 168 mentioned above, in which the welding is suggested of the intermediate member first to the rail and next to the frog, the process according to the present invention gives remarkable advantages which are very important to the aim of obtaining reliable welds, and, more precisely :

– the employment of the particular intermediate member, whose sizes assure the absolute absence of a mutual thermal influence between the two welded joints, such sizes in addition allowing the frog-member weld to be rapidly cooled with water, even though said member has already been welded to the rail. The importance of such operation in order to warrant the absolute absence of remarkable formation of brittle manganese carbides precipitates has already been widely illustrated above ;

– the provision of a suitable stress-relieving cycle in the furnace of the intermediate member-rail assembly, which treatment removes the residual welding stresses giving rise to structures of higher toughness with respect to the structures that can be obtained by means of the mere controlled cooling in the machine.

## Claims

1. A process for connecting austenitic manganese steel frogs of points to carbon or low-alloy steel rails, said process comprising the steps of :

a) realizing an intermediate member of length between 100 and 200 mm, having cross section close to that of the frog point, on one side, and to that of the rail, on the other side, and having the following composition :

| C  | 0.4 | – | 0.6 % |
|----|-----|---|-------|
| Mn | 12  | – | 15 %  |
| Mo | 1.5 | – | 2.5 % |
| Ni | 3   | – | 15 %  |

the balance being Fe and impurities which are normally present in steel ;

b) welding, by means of a weld without weld material the intermediate member to the carbon or low-alloy steel rail ;

c) cooling the weld under controlled conditions ;

d) performing a stress-relieving heat treatment in the furnace of the intermediate member-rail assembly;

e) welding whith a weld without weld material procedure the anti-wear austenitic manganese steel frog to said intermediate member ; and

f) cooling the weld obtained according to the step e) by water rapidly.

2. A process for connecting austenitic manganese steel frogs of points to carbon or low-alloy steel rails, said process comprising the steps of :

a) realizing an intermediate member of length between 100 and 200 mm, having cross section close to that of the frog point, on one side, and to that of the rail, on the other side, and having in addition the composition :

| C  | 0.2 %     | max |
|----|-----------|-----|
| Mn | 3.5 – 6.5 %|     |
| Si | 2 %       | max |
| Cr | 22 – 30 % |     |
| Ni | 9 – 25 %  |     |

the balance being Fe and impurities which are normally present in steel ;

b) welding by means of a weld without weld material said intermediate member to the carbon or low-alloy steel rail ;

c) cooling the weld under controlled conditions ;

d) performing a stress-relieving heat treatment in the furnace of the intermediate member-rail assembly;

e) welding by means of a procedure not employing weld material the anti-wear austenitic manganese steel frog to said intermediate member, and

f) rapidly cooling the weld obtained according to step e) with water.

3. A process according to claims 1 or 2, characterized in that said intermediate member is subjected, before being installed, to a work-hardening operation through peening, pressing, shot-peening, rolling or explosive compression.

4. A process according to claims 1 or 2, characterized in that the welding operation carried out according to the steps b) and e) is performed through flash butt welding.


**Ansprüche**

1. Verfahren zur Verbindung von Spitzen-Herzstuecken aus austenitischem Manganstahl mit Schienen aus Kohlenstahl oder niederwertigem Legierungsstahl, gekennzeichnet durch die folgenden Verfahrensschritte :

a) Vorbereitung eines Zwischenstueckes mit einer Laenge zwischen 100 und 200 mm und einem Durchschnitt, der einerseits demjenigen der Herzstueckspitze und andererseits demjenigen der Schiene nahe ist, wobei dieses Zwischenstueck folgende Zusammensetzung hat :

| | |
|---|---|
| C | 0,4 - 0,6% |
| Mn | 12 - 15% |
| Mo | 1,5 - 2,5% |
| Ni | 3 - 15% |

der Rueckstand bestehend aus Fe und gewoehnlich im Stahl vorliegenden Unreikigkeiten ;

b) Anschweissen dieses Zwischenelementes ohne Schweißstoff an die Schiene aus Kohlenstahl oder niederwertigem Legierungsstahl ;

c) Kuehlung der Scheißstelle unter kontrollierten Bedingungen ;

d) Durchfuehrung einer entspannenden Waermebehandlung der aus dem Zwischenelement und der Schiene bestehenden Einheit in einem Ofen ;

e) Ansschweissen ohne Schweißstoff des Herzstueckes aus austenitischem Manganstahl an das Zwischenstueck ;

f) Kuehlung mit Wasser der gemaess dem Verfahrenschritt (e erhaltenen Scheißstelle.

2. Verfahren zur Verbindung von Spitzen-Herzstuecken aus austenitischem Manganstahl mit Schienen aus Kohlenstahl oder niederwertigem Legierungsstahl, gekennzeichnet durch folgende Verfahrensschritte:

a) Vorbereitung eines Zwischenstueckes mit einer Laenge zwischen 100 und 200 mm und einem Durchschnitt, der einerseits demjenigen der Herzstueckspitze und andererseits demjenigen der Schiene nahe ist, wobei dieses Zwischentueck folgende Zusammensetzung hat :

| | |
|---|---|
| C | 0,2% max |
| Mn | 3,5 - 6,5% |
| Si | 2,0% max |
| Cr | 22 - 30% |
| Ni | 9 - 25% |

der Rueckstand bestehend aus Fe und gewoehnlich im Stahl vorhandenen Unreinigkeiten ;

b) Anschweissen ohne Schweißstoff dieses Zwischenelements an die Schiene aus Kohlenstahl oder niederwertigem Legierungsstahl ;

c) Kuehlung der Schweißstelle unter kontrollierten Bedingungen ;

d) Durchfuehrung einer entspannenden Waermebehandlung der aus dem Zwischenelement und der Schiene bestehenden Einheit ;

e) Anschweissen ohne Schweißstoff des verschleissfesten Herzstueckes aus austenitischem Manganstahl an das genannte Zwischenelement ;

f) Schnelle Abkuehlung mit Wasser der gemaess dem Verfahrenschritt (e erhaltenen Schweißstelle.

3. Verfahren gemaess Anspruch 1 oder 2, dadurch gekennzeichnet, dass vor dem Einbau das genannte Zwischenelement, einer Haertungsstufe durch Anspitzhaemmern, Schmieden, Kugelstrahlen, Walzen oder Sprungverdichtung unterworfen wird.

4. Verfahren gemaess Anspruch 1 oder 2, dadurch gekennzeichnet, dass die Schweissoperation gemaess den Verfahrensschritten b) und e) vermittels der Abbrennstumpfschweissung durchgefuehrt wird.

## Revendications

1. Procédé pour joindre des coeurs de croisement d'acier manganèse austenitique de pointes à rails d'acier carbone ou d'acier allié de qualité inférieure, ledit procédé comprenant les phases suivantes :

a) réalisation d'un élément intermédiaire ayant une longueur entre 100 et 200 mm et un coup transversal proche à celui de la pointe du coeur de croisement, d'un côté et à celui du rail, de l'autre côté et ayant la composition suivante :

| | |
|---|---|
| C | 0,4 - 0,6% |
| Mn | 12 - 15% |
| Mo | 1,5 - 2,5% |
| Ni | 3 - 15% |

le restant étant Fe et impureté normalement présente dans les aciers ;

b) soudure sans matériaux de soudure dudit élément intermédiaire au rail d'acier carbone ou d'acier allié de qualité inférieure ;

c) refroidissement de la soudure sous conditions controllées ;

d) exécution d'un traitement de distension à chaud de l'ensemble formé par l'élément intermédiaire et par le rail dans le four ;

e) soudure sans matériaux de soudure du coeur de croisement d'acier manganèse austénitique, résistant à l'usure, à l'élément intermédiaire et

f) refroidissement rapide par l'eau de la soudure obtenue selon la phase e).

2. Procédé pour joindre des coeurs de croisement d'acier manganèse austénitique à rails d'acier carbone ou d'acier allié de qualité inférieur, ledit procédé comprenant les phases suivantes :

a) réalisation d'un élément intermédiaire ayant une longueur entre 100 et 200 mm et un coup transversale proche à celui de la pointe du coeur de croisement d'un côté, et à celui du rail, de l'autre côté et ayant en outre la composition suivante :

| | |
|---|---|
| C | 0,2% max |
| Mo | 3,5 - 6,5% |
| Si | 2% |
| Cr | 22-30% |
| Ni | 9-25% |

le restant étant Fe et impureté normalement présente dans les aciers ;

b) soudure sans matériaux de soudure dudit élément intermédiaire au rail d'acier carbone ou d'acier allié de qualité inférieure ;

c) refroidissement de la soudure sous conditions controllées ;

d) exécution d'un traitement de distension à chaud de l'ensemble formé par l'élément intermédiaire et par le rail dans le four ;

e) soudure sans matériaux de soudure du coeur de croisement d'acier manganèse austénitique, résistant à l'usure, à l'élément intermédiaire et

f) refroidissement rapide par l'eau de la soudure obtenue selon la phase e).

3. Procédé selon la revendication 1 ou 2, caractérisé en ce que ledit élément intermédiaire avant être installé est soumis à une opération de durcissement par martelage à panne, forgeage, martelage par boules, laminage, ou compression explosive.

4. Procédé selon la revendication 1 ou 2, caractérisé en ce que l'opération de soudure selon les phases b) et e) est réalisée par le soudure bout à bout à scintillement.